# EUROPÄISCHE PATENTSCHRIFT

(11) **EP 2 596 950 B1**
(45) Veröffentlichungstag und Bekanntmachung des Hinweises auf die Patenterteilung: **29.06.2016**
(21) Anmeldenummer: 12007822.5
(22) Anmeldetag: 20.11.2012
(51) Int. Cl.: B42D 25/45

(54) **Verfahren zur Herstellung von Folienverbundmaterialien mit eingeschlossenen Bauteilen**
Method for the preparation of film composite materials with enclosed components
Procédé de fabrication de matériaux en film composite dotés de composants intégrés

(30) Priorität: 25.11.2011 DE 102011119518
(43) Veröffentlichungstag der Anmeldung: 29.05.2013
(73) Patentinhaber: Giesecke & Devrient GmbH, 81677 München (DE)
(72) Erfinder: Grundwürmer, Manuela, 81371 München (DE); Hofer, Werner, 85604 Zorneding (DE)

(56) Entgegenhaltungen:
- EP-A1- 2 085 914
- WO-A1-98/08681
- WO-A1-2005/068171
- WO-A2-2004/063977
- DE-A1- 19 854 986
- US-A- 3 674 622

## Beschreibung

Die Erfindung betrifft ein Verfahren zur Herstellung eines Folienverbundmaterials mit mindestens einem in das Folienverbundmaterial eingebetteten Bauteil, insbesondere ein Verfahren zur Herstellung einer Chipkarte, ein Folienverbundmaterial mit mindestens einem darin eingebetteten Bauteil, das nach dem erfindungsgemäßen Verfahren erhältlich ist, sowie einen Wertgegenstand, der das erfindungsgemäße Folienverbundmaterial mit mindestens einem darin eingebetteten Bauteil aufweist, insbesondere eine Chipkarte.

Sicherheitsdokumente und Wertdokumente wie Ausweisdokumente, Displaykarten, Kreditkarten, Bankkarten, Zugangskarten, oder auch Etiketten zur Warensicherung enthalten häufig Datenträger, typischerweise IC-Chips, oder andere elektronische oder mechanische Bauteile oder Bauteilgruppen. Diese dienen unterschiedlichen Zwecken, beispielsweise der Verifikation der Dokumente, dem Fälschungsschutz oder der Speicherung biometrischer Daten. Zur Ermöglichung einer kontaktlosen Datenübertragung ist der Chip mit einer in das Dokument integrierten Antenne verbunden.

Die elektronischen oder sonstigen Bauteile müssen geschützt untergebracht werden, um sowohl eine unbeabsichtigte Beschädigung als auch eine eventuelle beabsichtigte Manipulation zu verhindern. Daher werden die Bauteile zwischen Folien eingeschlossen. Der Folienverbund mit dem eingeschlossenen (eingehausten) Bauteil wird dann in einen Wertgegenstand integriert. Alternativ wird der Wertgegenstand als Folienverbund mit eingehaustem Bauteil bzw. eingehausten Bauteilen hergestellt. Die einzelnen Folien eines derartigen Folienverbundmaterials müssen so miteinander verbunden werden, dass sie weder vorsätzlich voneinander getrennt werden können noch während der Lebensdauer des Wertdokuments, das starken Belastungen ausgesetzt sein kann, beispielsweise durch häufiges Biegen, einer teilweisen Delaminierung unterliegen. Dieses Ziel wird am zuverlässigsten erreicht durch Verwendung thermoplastischer Folien, die unter Hitze und Druck miteinander laminiert werden. Bekannte Laminierverfahren für Folienverbundmaterialien mit eingeschlossenen Bauteilen sind jedoch mit zahlreichen Problemen behaftet:
Die einzuschließenden Bauteile sind zwar in der Regel, absolut gesehen, sehr dünn, relativ gesehen liegt ihre Dicke jedoch im Bereich der Dicken der verwendeten Folienmaterialien oder sogar darüber. Ein zwischen den Folienlagen eingeschlossenes Bauteil bewirkt daher eine Wölbung der Oberflächen des Folienverbundmaterials über den Stellen, an denen das Bauteil eingeschlossen ist. Dies ist einerseits optisch unbefriedigend und führt andererseits, was besonders nachteilig ist, häufig zu einer Beschädigung der Bauteile während des Laminiervorgangs. Durch den beim Laminieren angewendeten Druck werden die Bauteile quasi zerdrückt. Ein Laminieren bei geringeren Drücken und dafür höherer Temperatur und für eine längere Zeitdauer kann die Bauteile jedoch ebenfalls schädigen.

Es wurde daher versucht, durch Verwendung von Folien mit Ausnehmungen im Bereich der Bauteile einen Dickenausgleich zu schaffen, d.h. jedes Bauteil wird in einen zu seiner Aufnahme vorgesehenen Hohlraum eingesetzt. Durch diese Maßnahme kann zwar die Druckbelastung der Bauteile gemindert werden, dafür tritt aber ein anderes Problem eher verstärkt auf. Da es nicht möglich ist, Bauteile und Hohlräume völlig passergenau aufeinander abzustimmen, befindet sich stets Luft in diesen Hohlräumen, was insofern unerwünscht ist, als Lufteinschlüsse mechanische Schwachpunkte darstellen und außerdem zu einer optischen Beeinträchtigung führen. Außerdem wird die Temperaturbelastung dadurch nicht verringert.

Zur Verringerung der Temperaturbelastung wurden auch Kaltlaminierungsverfahren verwendet, die jedoch zu einem schlechten Folienverbund mit der Gefahr einer Delaminierung bei mechanischen Belastungen wie häufigem Biegen führen.

Eine weitere bekannte Alternative ist die Herstellung des Folienverbunds in einem zweistufigen Laminierungsprozess. Dabei wird zuerst ein Teil der Folien bei hoher Temperatur miteinander laminiert, dann das Bauteil in einen dafür vorgesehenen Hohlraum eingesetzt, und schließlich eine Deckfolie oder ein weiterer vorlaminierter Folienverbund bei schonenderen Laminierungsbedingungen, d.h. niedrigerer Temperatur und/ oder niedrigerem Druck, auflaminiert. Gelegentlich wird auch unter weniger schonenden Bedingungen laminiert in der Hoffnung, dass das Bauteil durch die vorlaminierten Folien ausreichend geschützt wird. Der Umweg über die Herstellung von Vorlaminaten ist allerdings zeitaufwendig und beseitigt auch nicht das Problem von Lufteinschlüssen.

Um Zeit einzusparen werden die Laminierungsprozesse gerne als Mehrlagenlaminierverfahren durchgeführt, d.h. zwischen die Presswerkzeuge einer Laminierpresse werden mehrere Folienstapel eingelegt, die durch Laminierbleche voneinander getrennt werden. Bei derartigen Mehrlagenlaminierverfahren kommt es infolge des von den Heiz/Pressplatten zur Laminierstapelmitte jeweils abnehmenden Temperaturgradienten zu einer Verwölbung der fertigen Karten, die insbesondere bei asymmetrisch aufgebauten Karten, das heißt Karten, die beispielsweise zu einer Oberfläche hin ein Bauelement aufweisen, nachteilig sind. Verwölbungen können Displaykarten unbrauchbar machen, und auch bei Designmerkmalen oder zusätzlichen Sicherheitsmerkmalen wie beispielsweise Hologrammen ist eine Verzerrung durch eine Wölbung des Trägermaterials natürlich unerwünscht.

Ein besonderes Problem stellen unregelmäßig geformte Module oder Bauteile dar. Je unregelmäßiger ein Bauteil geformt ist, desto schwieriger ist es, eine einigermaßen passergenaue Ausnehmung zur Aufnahme des Bauteils zu schaffen. Insbesondere ist es praktisch unmöglich, passergenaue Ausnehmungen für gerundete oder feinstrukturierte Bauteiloberflächen zu schaffen. Lufteinschlüsse mit den damit verbundenen optischen Beeinträchtigungen und einer mechanischen Schwächung des Folienverbunds sind hier, zusätzlich zu den übrigen oben genannten Problemen, unvermeidbar.

Die Problematik von Lufteinschlüssen ist bekannt, und es wurden auch Versuche unternommen, das Problem zu lösen. Die DE 10 2009 060 862 A1 offenbart ein Verfahren zum Laminieren von Folienlagen, bei dem eine Trägerfolienlage, eine Folienlage mit einer Ausnehmung zur Aufnahme eines Chips (Ausgleichsfolienlage) und eine Fließfolienlage unter Erzeugung eines Temperaturgradienten innerhalb des Folienlagenstapels miteinander laminiert werden. Der Temperaturgradient wird durch zeitversetzte Aufheizung der Presswerkzeuge oder durch Verwendung von Presspolstern, die eine verzögerte Wärmeübertragung an die Folienlagen bewirken, erzeugt. Die Fließfolienlage hat einen niedrigeren Erweichungspunkt als die übrigen Folien, und wenn die Fließfolienlage überdies früher aufgeheizt wird als die übrigen Folien, dringt Material von der Fließfolienlage in die nicht von dem Chip ausgefüllten Hohlräume der Ausgleichsfolienlage ein und füllt sie im Idealfall aus. Während des Laminierens wird der Folienlagenstapel vorzugsweise einem Druck senkrecht zum Stapel unterworfen, um zwischen den Folienlagen befindliche Luft herauszupressen. In dem Hohlraum der Ausgleichsfolienlage befindliche Luft entweicht dabei jedoch nur unbefriedigend, und insbesondere bei unregelmäßig geformten Bauteilen können sich Probleme mit Lufteinschlüssen ergeben. Bei einem Mehrlagenlaminierverfahren ist es auch schwierig, einen passenden Temperaturgradienten einzustellen.

Die GB 2 279 610 A offenbart ein Laminierverfahren, bei dem eine gedruckte Schaltung und elektronische Bauteile, die in einer Einbettmasse verkapselt sind, auf einem Substrat bereitgestellt werden, beidseitig des Substrats Polyesterschichten und Außenschichten angebracht werden, und der Folienstapel mit steigendem Druck unter Hitze gepresst wird. Die Polyesterschichten sind beidseitig mit thermisch aktivierbarem Klebstoff beschichtet, der eine Verbindung der Folien bewirkt. Während des Pressens, das gepulst durchgeführt wird, wird Vakuum gezogen. Durch das gepulste Pressen soll ein Zerdrücken der elektronischen Bauteile vermieden werden, und durch das Pressen unter Vakuum sollen Lufteinschlüsse verhindert werden. Das Verfahren ist jedoch insofern umständlich und zeitraubend, als es ein vorheriges Verkapseln der elektronischen Bauteile erfordert. Zudem haben die gekapselten Bauteile eine beträchtliche Dicke, was zu Wölbungen und Verzerrungen der Folien führt.

Die JP 11-348129 offenbart ein Verfahren zur Herstellung eines Laminatmaterials mit einem eingebetteten Bauteil, bei dem das einzubettende Bauteil zwischen zwei Folien eingelegt wird, und die Folien mittels Heißklebstoff verklebt werden. Bei dem Verfahren wird zuerst Vakuum angelegt, um Luft zwischen den Folien zu entfernen, dann die Folien unter Vakuum an ihrem Umfangsbereich durch Hitzeeinwirkung miteinander verklebt, so dass das Vakuum im Innenbereich erhalten bleibt. Anschließend werden die Folien heißgepresst und dann kaltgepresst. Bei dem Verfahren werden keine speziellen Maßnahmen zum Schutz des Bauteils beim Pressen getroffen, und das Verfahren ist aufgrund seiner Mehrstufigkeit umständlich und zeitraubend. Außerdem kommt es wegen des fehlenden Dickenausgleichs zu einem Verziehen der Folien. Insgesamt ist keines der bekannten Verfahren in jeder Hinsicht zufriedenstellend.

Ferner offenbart US 3,674,622 ein laminiertes Medium, bei welchem eine Speicherkarte oder dergleichen in eine relativ dünne Schicht aus Haftmittel eingebettet wird. Bei dem Haftmittel kann es sich um ein wärmeaktivierbares Haftmittel, ein druckaktivierbares Haftmittel, ein wasseraktivierbares Haftmittel oder ein heißschmelzendes Haftmittel handeln. Das Laminieren erfolgt bei normalen (atmosphärischen) Druckverhältnissen. Die Speicherkarte wird bei dem laminierten Medium in eine Schicht aus Polymermaterial eingebettet.

Aufgabe der vorliegenden Erfindung ist es daher, die vorstehend aufgeführten Probleme des Stands der Technik möglichst weitgehend zu vermeiden und ein verbessertes Verfahren zur Herstellung eines Folienverbundmaterials mit einem in das Folienverbundmaterial eingebetteten Bauteil bereitzustellen.

Das Verfahren sollte die Belastung der Bauteile durch erhöhten Druck und erhöhte Temperatur während des Laminiervorgangs minimieren, die insgesamt erforderliche Prozesszeit minimieren, und den Einbau unregelmäßig geformter Bauteile, insbesondere auch von Bauteilen mit gerundeten Oberflächen, fein strukturierten Oberflächen, und von vergleichsweise dicken Bauteilen, erlauben. Die mittels des erfindungsgemäßen Verfahrens hergestellten Folienverbundmaterialien mit darin eingebettetem Bauteil sollten eine mechanisch stabile, dauerhafte Verbindung zwischen den Folienlagen aufweisen. Die Oberflächen der Folienverbundmaterialien sollten eben sein, und auch die Folienverbundmaterialien an sich sollten nicht verzogen und/ oder verwölbt sein, um Beeinträchtigungen von Merkmalen an den Oberflächen (Displays, Hologramme, etc.) und an Strukturen im Inneren des Folienverbundmaterials (elektrische Verbindungen) zu vermeiden. Insbesondere sollten auch optische Beeinträchtigungen und Beeinträchtigungen der Stabilität der Folienverbindungen durch Lufteinschlüsse, die im Extremfall zum Delaminieren führen können, vermieden werden. Diese Eigenschaften sollen insbesondere auch beim Einbetten sehr komplex geformter Bauteile, d.h. unregelmäßig geformter Bauteile, mit variierenden lateralen und vertikalen Abmessungen und/ oder variierenden Oberflächenstrukturen, und beim Einbetten von Bauteilen mit vergleichsweise großer Dicke erreicht werden.

Die Aufgaben werden gelöst durch ein Verfahren zur Herstellung eines Folienverbundmaterials sowie durch ein mittels des Verfahrens erhältliches Folienverbundmaterial mit eingebettetem Bauteil, jeweils mit den Merkmalen, wie sie in den unabhängigen Ansprüchen angegeben sind. Ausführungsformen der Erfindung sind in den jeweiligen abhängigen Ansprüchen angegeben.

Bei dem erfindungsgemäßen Verfahren zur Herstellung eines Folienverbundmaterials mit einem in das Folienverbundmaterial eingebetteten Bauteil werden eine Trägerfolie, mindestens eine Aufnahmefolie, d.h. eine Folie zur Aufnahme eines Bauteils, und eine Deckfolie miteinander laminiert. Die Aufnahmefolie weist eine Ausnehmung auf, die hinsichtlich Form und Größe dazu geeignet ist, das einzubettende Bauteil passergenau aufzunehmen. Während des Laminierens befindet sich das einzubettende Bauteil in der Ausnehmung der Aufnahmefolie.

Bei dem erfindungsgemäßen Verfahren wird zunächst die mindestens eine Aufnahmefolie auf die Trägerfolie aufgelegt, dann ein Ausgleichsmaterial mindestens in die Ausnehmung der Aufnahmefolie, und gegebenenfalls auch auf ihre freie Oberfläche oder Teile ihrer freien Oberfläche, eingebracht bzw. aufgebracht, dann das Bauteil in die Ausnehmung eingesetzt, und schließlich das Bauteil und die Aufnahmefolie durch Auflegen einer Deckfolie abgedeckt. Wesentlich ist, dass als Ausgleichsmaterial ein Material verwendet wird, das unter Laminierungsbedingungen thermisch aktiviert wird, d.h. erweicht und zumindest in einem gewissen Ausmaß fließfähig und klebrig wird, und sich beim Abkühlen wieder verfestigt, wobei das Ausgleichsmaterial eine niedrigere Aktivierungstemperatur aufweisen muss als die übrigen Folienmaterialien des Folienverbundmaterials. Alternativ oder zusätzlich kann das Ausgleichsmaterial auch auf in die Ausnehmung einzusetzende Oberflächenbereiche des Bauteils aufgebracht werden.

Der gebildete Folienstapel mit dem Bauteil in der Ausnehmung der Aufnahmefolie wird nun in eine evakuierbare Laminierpresse eingelegt und Vakuum angelegt. Dabei wird Luft zwischen den Folienlagen und in der Ausnehmung der Aufnahmefolie wirkungsvoll entfernt. Nach Einstellen des gewünschten Vakuums wird der Folienstapel einem Heißpressen unterzogen. Da das Ausgleichsmaterial einen niedrigeren Aktivierungspunkt bzw. Erweichungspunkt aufweist als die übrigen Folien des Stapels erweicht es zuerst, wird fließfähig oder zumindest beweglich und schließt etwaige Zwischenräume zwischen dem Bauteil und den Folienmaterialien. Dabei füllt das Ausgleichsmaterial auch kleinste Zwischenräume, da es sich bereits zu Beginn des Laminiervorgangs praktisch genau an den Stellen befindet, an denen es gebraucht wird, nämlich in erster Linie in den das einzubettende Bauteil umgebenden Hohlräumen. Auf diese Weise braucht das Ausgleichsmaterial sich nur über minimalste Distanzen zu bewegen bzw. zu fließen, um sämtliche Ecken und Winkel zu erreichen. Die Ortsveränderung des Ausgleichsmaterials wird zudem durch das angelegte Vakuum effizient unterstützt.

Nach dem Laminieren wird das gebildete Folienverbundmaterial abkühlen lassen, bevorzugt ebenfalls unter Vakuum. Das gebildete Folienverbundmaterial weist ebene Oberflächen auf, da das eingebettete Bauteil vollständig in der Ausnehmung der Aufnahmefolie aufgenommen ist. Es ist auch in optimaler Weise frei von Lufteinschlüssen, was einem vorteilhaften Zusammenwirken mehrerer Merkmale des erfindungsgemäßen Verfahrens zu verdanken ist. Zum einen befindet sich bereits vor dem Anlegen des Vakuums aufgrund der gleichen Abmessungen des Bauteils und der Ausnehmung in der Aufnahmefolie nur wenig Luft in dem Folienstapel, und zum anderen werden etwa vorhandene Lufteinschlüsse durch das Evakuieren weitestgehend entfernt. Sollte trotz des Evakuierens noch irgendwo eingeschlossene Luft verbleiben, so wird diese Luft spätestens beim Erweichen des Ausgleichsmaterials entfernt. Das Ausgleichsmaterial wird durch das Vakuum auch in feinste Hohlräume gezogen, so dass ein kompaktes, flaches Verbundmaterial, das frei von Lufteinschlüssen ist, erhalten wird. Die Entfernung von Luft aus dem Folienstapel beim Evakuieren kann durch die Verwendung von Folien mit hoher Oberflächenrauhigkeit noch gesteigert werden.

Das erfindungsgemäße Laminierungsverfahren ist ein einstufiges Verfahren, d.h. es werden sämtliche Folien in nur einem einzigen Arbeitsgang miteinander laminiert. Dadurch werden die empfindlichen Bauteile nur für eine verhältnismäßig geringe Zeitspanne den Belastungen von erhöhter Temperatur und erhöhtem Druck ausgesetzt. Durch das Laminieren im Vakuum können zudem Drücke und Temperaturen reduziert werden, was die thermischen Belastungen und Druckbelastungen der einzubettenden Bauteile während des Laminierens zusätzlich reduziert.

Das erfindungsgemäße Folienverbundmaterial kann ein oder mehrere Bauteile oder Bauteilgruppen aufweisen, die hinsichtlich ihrer Größen und Formen nicht in besonderer Weise eingeschränkt sind. Eine gewisse "natürliche" Begrenzung der Abmessungen der einzubettenden Bauelemente stellen natürlich die Abmessungen des Folienverbundmaterials selbst dar. Bevorzugt werden elektronische Bauteile wie beispielsweise IC-Chips eingebettet (Chipkarten), aber das erfindungsgemäße Verfahren ist auch zum Einbetten beliebiger anderer Teile, vorzugsweise druckempfindlicher und/ oder temperaturempfindlicher Teile, in Folienverbundmaterialien geeignet.

Das erfindungsgemäße Verfahren ist selbstverständlich auch geeignet zum Einbetten völlig regelmäßig geformter Bauteile, wobei unter regelmäßig geformten Bauteilen solche Bauteile zu verstehen sind, deren obere und untere Begrenzungsflächen (Flächen, die zu den Oberflächen des Folienstapels weisen) eben sind und deren seitliche Begrenzungsflächen eine Umrissform aufweisen, die aus einem Folienmaterial ausgestanzt werden kann. Besonders zur Geltung kommen die Vorteile des erfindungsgemäßen Verfahrens jedoch beim Einbetten von Bauteilen mit unregelmäßigen Abmessungen, und je komplexer ein Bauteil geformt ist, desto vorteilhafter ist das erfindungsgemäße Verfahren gegenüber bisher bekannten Verfahren.

Zum Einbetten unregelmäßig geformter Bauteile werden bevorzugt mehrere Aufnahmefolien verwendet, wobei die Ausnehmung zur Aufnahme des unregelmäßig geformten Bauteils von allen Aufnahmefolien in Kombination gebildet wird. Um eine möglichst passergenaue Aufnahme des unregelmäßig geformten Bauteils zu gewährleisten, wird das Bauteil in vertikaler Richtung (senkrecht zu den Oberflächen des Folienverbundmaterials) gedanklich in Scheiben aufgeteilt, wobei jede Scheibe eine Umrissform hat, die aus einem Folienmaterial ausgestanzt werden kann. Eine der Anzahl und Dicke dieser "Scheiben" entsprechende Anzahl von Aufnahmefolien mit der erforderlichen Dicke wird jeweils mit einer Ausnehmung in den Umrissformen der zugehörigen "Scheibe" ausgestattet. Die Aufnahmefolien werden so aufeinander gestapelt, dass das unregelmäßig geformte Bauteil passergenau in die von den gestapelten Aufnahmefolien gemeinsam gebildete Ausnehmung eingesetzt werden kann.

Alternativ könnte die Ausnehmung auch in eine einzige Aufnahmefolie eingeprägt werden, oder es könnte ein Teil der Ausnehmung in die Trägerfolie oder eine Aufnahmefolie eingeprägt werden und der andere Teil der Ausnehmung durch weitere Aufnahmefolien mit passend geformten Ausnehmungen realisiert werden.

Bei besonders komplex geformten Bauteilen ist es auch mittels mehrerer Aufnahmefolien nicht möglich, die Umrissformen der Bauteile im wesentlichen passergenau nachzubilden. Die fehlende Passergenauigkeit wird jedoch erfindungsgemäß durch das Ausgleichsmaterial ausgeglichen.

Die erfindungsgemäßen Folienverbundmaterialien weisen in ihrer einfachsten Ausführungsform neben einem oder mehreren eingebetteten Bauteilen eine oder mehrere Aufnahmefolien, eine Trägerfolie an einer Oberfläche der Aufnahmefolie bzw. des Aufnahmefolienstapels, und eine Deckfolie an der anderen Oberfläche der Aufnahmefolie bzw. des Aufnahmefolienstapels auf. Bei diesem Aufbau sind die Trägerfolie und die Deckfolie gleichzeitig Außenfolien.

Die erfindungsgemäßen Folienverbundmaterialien enthalten jedoch bevorzugt eine oder mehrere weitere Folien, beispielsweise eine oder mehrere Folien an der Außenoberfläche der Trägerfolie und/ oder eine oder mehrere Folien an der Außenoberfläche der Deckfolie. Die Trägerfolie bzw. die Deckfolie werden durch die Anbringung weiterer Folien zu Zwischenfolien, d.h. Folien zwischen einer Außenfolie und einer anderen Folie des Folienstapels.

Ein erfindungsgemäßes Folienverbundmaterial kann daher einen Kern aus einer Trägerfolie und einer Aufnahmefolie bzw. einem Aufnahmefolienstapel mit einem oder mehreren Bauteilen, und an beiden Oberflächen des Kerns eine oder mehrere Deckfolien aufweisen. Die jeweils äußersten der Deckfolien sind Außenfolien, die Folien zwischen den Außenfolien und der Aufnahmefolie bzw. dem Aufnahmefolienstapel werden als Zwischenfolien bezeichnet.

Alle Folien, insbesondere die Deckfolien, können mit Sicherheitsmerkmalen und/ oder Designmerkmalen ausgestattet werden, beispielsweise mit Hologrammen oder anderen diffraktiven oder refraktiven Strukturen. Hinsichtlich zusätzlicher Sicherheitsmerkmale gibt es keine speziellen Einschränkungen. Bei dem erfindungsgemäßen Verfahren, bei dem bevorzugt sämtliche Folien des Folienstapels einstufig, das heißt in einem Schritt, miteinander laminiert werden, sind die ausgeübten Temperatur- und Druckbelastungen so gering und von so kurzer Dauer, dass auch empfindliche Sicherheitsmerkmale problemlos integriert werden können.

Die einzelnen Folienlagen eines erfindungsgemäßen Folienverbundmaterials können aus gleichen oder verschiedenen Materialien bestehen, vorzugsweise aus thermisch aktivierbaren Materialien, d.h. Materialien, die bei höherer Temperatur erweichen und beim Abkühlen mit angrenzenden Materialien verkleben, wie aus thermoplastischen Kunststoffen, aus thermoplastischen Elastomeren oder Gemischen von Thermoplasten und thermoplastischen Elastomeren. Einzelne Folienlagen können auch aus nicht thermoplastischen Materialien bestehen, sofern die an die nicht thermoplastischen Folien angrenzenden Folien thermoplastisch sind oder geeignete thermisch aktivierbare Klebstoffe zwischen den Folien vorgesehen sind. Bevorzugte Materialien für die Folien, d.h. Kernfolien, Zwischenfolien und Außenfolien, sind Polyolefine, wie Polyethylen und Polypropylen, Polystyrol, StyrolCopolymere, Polyurethane, Polyamide, Polyimide, Polycarbonate, Polyvinylchlorid, und Polyester, wie beispielsweise Polyethylenterephthalat.

Die Folien können transparent oder opak sein, Füllstoffe, Pigmente, UV-Stabilisatoren, Oxidationsstabilisatoren, Flammhemmer und sonstige übliche Additive enthalten. Die Außenschichten können gegebenenfalls zusätzlich Antiblockmittel aufweisen.

Die Dicken der Einzelfolien liegen bevorzugt im Bereich von etwa 100 bis 300 µm, und die Dicke des gebildeten Folienverbundmaterials liegt typischerweise im Bereich von etwa 300 bis 1000 µm.

Als Ausgleichsmaterialien werden Folien aus Thermoplasten oder aus thermoplastischen Elastomeren, oder thermisch aktivierbare Klebstoffe wie Heißsiegelklebstoffe oder Heißschmelzmassen verwendet. Auch Kombinationen dieser Materialien können verwendet werden.

Heißsiegelklebstoffe sind beispielsweise Polymere und Copolymere auf der Basis von Ethylen, (Meth)acrylaten, Vinylchlorid, Vinylidenchlorid oder Vinylacetat, Polyamide, Polyester und Polyurethane. Die Heißsiegelklebstoffe werden als Lösung, Emulsion oder Suspension, als Pulver oder als Schmelze aufgetragen. Durch Verdampfen des Lösungsmittels oder durch Abkühlen ergeben sie einen nicht-klebrigen Klebstofffilm, der durch Heißpressen aktiviert wird. Die Klebstoffe werden beispielsweise aufgesprüht oder aufgedruckt.

Analoges gilt für Heißschmelzmassen, die bei Normaltemperatur fest oder viskos sind und beim Erwärmen erst thermoplastisch und dann zähflüssig oder dünnflüssig werden.

Als Ausgleichsmaterialfolien kommen grundsätzlich dieselben Folienmaterialien in Frage wie für die "eigentlichen" stapelbildenden Folien (Aufnahmefolien, Trägerfolie, Deckfolien), wobei jedoch die Erweichungspunkte der stapelbildenden Folien und der Ausgleichsfolie aufeinander abgestimmt werden müssen. Wesentlich ist, dass das Ausgleichsmaterial einen niedrigeren Erweichungspunkt aufweist als die stapelbildenden Folien. Dies gilt selbstverständlich nicht nur für Ausgleichsmaterialfolien, sondern auch für Ausgleichsmaterialien in Form thermisch aktivierbarer Klebstoffe. Bevorzugt ist der thermische Aktivierungspunkt bzw. Erweichungspunkt des Ausgleichsmaterials mindestens 3°C niedriger als der Erweichungspunkt aller Folien, mit denen das Ausgleichsmaterial in Berührung kommt, bevorzugter mindestens 6°C, und besonders bevorzugt mindestens 10°C niedriger als der Erweichungspunkt mindestens dieser angrenzenden Folien, bevorzugt aller Folien des Stapels.

Besonders bevorzugte Ausgleichsmaterialien sind Folien aus thermoplastischem Elastomer. Derartige Folien sind sehr elastisch und "lappig", ganz besonders bei geringen Foliendicken. Die mangelnde Steifigkeit und Dimensionsstabilität von Folien aus thermoplastischem Elastomer ist beim Laminieren generell eher nachteilig, weshalb Stapelfolien aus thermoplastischem Elastomer weniger bevorzugt sind. Für den erfindungsgemäßen Zweck ist die "Lappigkeit" derartiger Folien jedoch von Vorteil. Folien aus thermoplastischem Elastomer schmiegen sich besonders gut an unregelmäßige Konturen, wie die Konturen unregelmäßig geformter Ausnehmungen, an und stellen kein Hemmnis beim Einfügen eines unregelmäßig geformten Bauteils in eine entsprechende Ausnehmung dar. Sie können beim Einsetzen des Bauteils problemlos in die benötigte Form gedrückt werden. Bevorzugte Foliendicken für Ausgleichsmaterialfolien sind etwa 20 bis 50 µm, insbesondere etwa 30 µm.

Die Ausgleichsmaterialien können vollflächig (auf alle Oberflächen der Ausnehmung sowie die Oberfläche der Aufnahmefolie oder der obersten Aufnahmefolie außerhalb der Ausnehmung) oder teilflächig (beispielsweise nur auf die horizontalen Bereiche innerhalb der Ausnehmung) aufgebracht werden. Ausgleichsmaterialfolien können natürlich nicht mit Unterbrechungen aufgebracht werden, weshalb sie stets zusammenhängende Bereiche bedecken, beispielsweise auch die vertikalen Bereiche zwischen horizontalen Bereichen innerhalb einer Ausnehmung. Alternativ oder zusätzlich kann auch Ausgleichsmaterial vollflächig oder teilflächig auf das einzuschließende Bauteil aufgebracht werden. Bereiche, in denen elektrische Verbindungen mit anderen Bauteilen bzw. Leiterbahnen, Antennen, etc. ausgebildet werden sollen, werden bevorzugt frei von Ausgleichsmaterial gelassen.

Das erfindungsgemäße Laminierungsverfahren wird, wie erwähnt, bevorzugt als einstufige Laminierung durchgeführt, d.h. alle Folien eines Stapels werden gleichzeitig miteinander laminiert. Außerdem werden die Bauteile in Ausnehmungen eingesetzt, in die zuvor ein Ausgleichsmaterial eingebracht wurde, oder sind selbst mit Ausgleichsmaterial ausgestattet, und während des Laminierens wird evakuiert.

Gemäß einer besonders bevorzugten Ausführungsform des erfindungsgemäßen Verfahrens wird außerdem die Temperatur der Heizplatten der Laminierpresse getrennt geregelt. Die unabhängige Temperaturführung der Heizplatten ist sowohl zeitlich als auch örtlich möglich. Eine zeitlich unabhängige Temperaturführung bedeutet, dass sich die Heizplatten zu jedem Zeitpunkt des Laminiervorgangs bei unterschiedlichen Temperaturen befinden können. Außerdem können sie auf unterschiedliche Höchsttemperaturen aufgeheizt werden. Eine örtlich unabhängige Temperaturführung bedeutet, dass die betreffende Heizplatte so ausgelegt ist, dass sie gleichzeitig Bereiche mit unterschiedlichen Temperaturen aufweisen kann. Besonders bevorzugt ist es, zeitlich unabhängige Temperaturführung und örtlich unabhängige Temperaturführung miteinander zu kombinieren.

Durch die unabhängige Temperaturführung können besonders gut die spezielle Struktur und die jeweiligen Materialien eines bestimmten Folienverbundmaterials berücksichtigt werden, um die einzubettenden Bauteile in idealer Weise zu schonen. Beispielsweise kann ein asymmetrisch aufgebautes Folienverbundmaterial, d.h. ein Folienverbundmaterial, das an einer Seite des Bauteils mehrere Folien aufweist, an der anderen Seite des Bauteils jedoch nicht, durch eine zeitlich unabhängige Temperaturführung der Heizplatten an der Seite mit mehreren Folien rasch und für eine längere Zeitdauer auf eine höhere Temperatur aufgeheizt werden, während die andere Seite, an der das Bauteil oberflächennah ist, nur auf eine niedrigere Temperatur und für eine kürzere Zeitspanne aufgeheizt wird. Alternativ oder zusätzlich können durch eine örtlich unabhängige Temperaturführung alle Bereiche des Folienverbundmaterials, in denen sich kein temperaturempfindliches Bauteil befindet, auf eine hohe Temperatur aufgeheizt werden, während Bereiche, in denen ein temperaturempfindliches Bauteil heizplattennah angeordnet ist, nur auf niedrige Temperaturen aufgeheizt werden, und Bereiche, in denen sich zwar ein temperaturempfindliches Bauteil befindet, das Bauteil aber nicht heizplattennah ist, auf eine dazwischen liegende Maximaltemperatur aufgeheizt wird. Allgemein gesagt wird der Temperaturverlauf zeitlich und/ oder örtlich an die Form und Lage eines Bauteils in dem Folienverbundmaterial so angepasst, dass eine optimale Schonung des Bauteils erreicht wird.

Gemäß einer alternativen besonders bevorzugten Ausführungsform des erfindungsgemäßen Verfahrens erfolgt der Wärmeeintrag und Druckeintrag beim Laminieren unter Zwischenlegung von Wärmedruckpolstern zwischen Heizplatten und Folienstapel. Wärmedruckpolster können an einer Seite des Folienstapels oder an beiden Seiten des Folienstapels vorgesehen werden, wobei bei Verwendung von zwei Wärmedruckpolstern gleiche oder verschiedene Wärmedruckpolster zum Einsatz kommen können. Wärmedruckpolster gleichen Druckungleichmäßigkeiten aus und unterstützen eine gezielte Steuerung des Wärmeübergangs von den Heizplatten auf den Folienstapel. Außerdem helfen sie, ein konvex-konkaves Verziehen des Folienstapels beim Laminieren zu verhindern.

Sehr gut geeignet ist beispielsweise das Wärmedruckpolster YOM, das von der Firma Yamauchi (Japan) erhältlich ist. Grundsätzlich sind jedoch auch beliebige andere Wärmedruckpolster geeignet. Bevorzugte Druckpolster-Dicken liegen im Bereich von etwa 1 bis 5 mm.

Gemäß einer weiteren besonders bevorzugten Ausführungsform des erfindungsgemäßen Verfahrens wird das Laminieren als Einlagenlaminierverfahren durchgeführt. Beim Einlagenlaminierverfahren befindet sich zwischen den Heizplatten einer Laminierpresse nur ein einziger Folienstapel, während bei konventionellen Mehrlagenlaminierverfahren stets mehrere Folienstapel gleichzeitig laminiert werden. Die einzelnen Folienstapel werden durch Zwischenbleche voneinander getrennt. Das Mehrlagenlaminierverfahren wird verwendet, weil davon ausgegangen wird, dass es durch das gleichzeitige Laminieren mehrerer Folienstapel die Produktivität steigert. Leider hat es diverse Nachteile, wie eine Neigung der fertigen Folienverbundmaterialien zum Verwölben, die in erster Linie auf den von den Heizplatten zur Laminierstapelmitte abnehmenden Temperaturgradienten zurückzuführen ist.

Erfindungsgemäß wurde jedoch überraschenderweise gefunden, dass ein Einlagenlaminierverfahren die Produktivität gegenüber einem Mehrlagenlaminierverfahren nicht senkt, sondern im Gegenteil eher erhöht. Dies ist auf mehrere Faktoren zurückzuführen, die in vorteilhafter Weise zusammenwirken. Zum einen kann die Laminierzeit auf eine Dauer von nur etwa 1 bis 3 Minuten verringert werden, und zum anderen können Laminierdruck und Laminiertemperatur gegenüber dem Mehrlagenlaminierverfahren abgesenkt werden. Dadurch wird die Temperaturbelastung und die Druckbelastung der Bauteile verringert, so dass weniger Ausschuss erzeugt wird. Falls bei einem Durchgang Ausschuss erzeugt wird, so ist jeweils nur ein Folienstapel Ausschuss. Die Kombination von kurzen Prozesszeiten und geringen Ausschussmengen ergibt in Summe eine Steigerung der Produktivität gegenüber dem Mehrlagenlaminierverfahren.

Die vorstehend genannten besonders bevorzugten Ausführungsformen können jeweils alleine oder in Kombination von zwei oder mehreren angewendet werden.

Typische Laminierungsbedingungen sind Temperaturen von etwa 120°C bis 200°C, bevorzugt etwa 130°C bis 180°C, besonders bevorzugt etwa 140°C bis 160°C, Pressdrücke von etwa 10 bar bis 60 bar, bevorzugt etwa 40 bis 50 bar, und ein Vakuum von etwa 5 bis 70 mbar, bevorzugt etwa 20 bis 50 mbar. Typische Laminierzeiten liegen bei 2 bis 5 min.

Herkömmliche Laminierverfahren mit Mehrlagenlaminierung, z.B. 6 bis 10 Lagen pro Etage, erlauben vergleichbare Temperaturbedingungen. Jedoch liegen die Pressdrücke hier typischerweise bei 100 bis 500 bar und die Laminierzeiten, d.h. Heiz- und Kühlzyklus, betragen typischerweise 30 bis 45 min.

Herkömmliche Laminierverfahren führen mithin gegenüber dem erfindungsgemäßen zu einer deutlich erhöhten thermischen und Druckbelastung von Bauteilen.

Um das Anhaften des zu laminierenden Folienstapels an den Presswerkzeugen der Laminierpresse zu vermeiden und/ oder um bestimmte Oberflächenstrukturen an den Außenfolien des Folienstapels zu erhalten kann zwischen den Folienstapel und den Presswerkzeugen eine temperaturstabile Antihaftschicht eingebracht werden.

Das erfindungsgemäße Folienverbundmaterial mit darin eingebettetem Bauteil oder Bauteilgruppen kann als individuelles Wertdokument, beispielsweise als Chipkarte, oder als Folienverbundmaterial-Bogen oder -Band, aus dem die einzelnen Wertdokumente ausgestanzt oder ausgeschnitten werden, hergestellt werden. Alternativ kann das Folienverbundmaterial auch in Form eines Vorprodukts hergestellt werden, das in den Schichtaufbau eines Wertdokuments integriert wird. Gemäß einer bevorzugten Ausführungsform des erfindungsgemäßen Verfahrens werden Bögen oder Bänder mit einer Vielzahl von Einzelnutzen hergestellt, wobei die Bögen oder Bänder bereits alle Folienschichten der herzustellenden Wertdokumente aufweisen. Auf diese Weise kann die Produktivität maximiert werden.

Das erfindungsgemäße Laminierungsverfahren ist besonders vorteilhaft, wenn eine Einbettung sehr komplex geformter und/ oder relativ dicker Bauteile gewünscht ist. Insbesondere wenn das erfindungsgemäße Verfahren sowohl als Einlagenlaminierverfahren als auch als Verfahren mit zeitlich und/ oder örtlich unabhängiger Temperaturführung der Heizplatten beim Laminieren durchgeführt wird, werden beste Einbettungsergebnisse erzielt.

Die vorliegende Erfindung wird nachfolgend anhand von Figuren noch weiter veranschaulicht. Es wird darauf hingewiesen, dass die Figuren nicht maßstabs- und nicht proportionsgetreu sind. Selbstverständlich haben die Figuren lediglich erläuternden Charakter und sind nicht beschränkend zu verstehen. Außerdem sind in jeder Figur naturgemäß stets Kombinationen von Merkmalen dargestellt, wobei die einzelnen Merkmale natürlich auch in anderen Kombinationen sinnvoll sein können. Maßgebend ist hierfür das Verständnis des Fachmanns. In den Figuren bezeichnen gleiche Bezugsziffern gleiche oder entsprechende Elemente.

Es zeigen:
- Figur 1: eine schematische Schnittdarstellung eines Folienverbundmaterials mit unregelmäßig geformtem Bauteil,
- Figur 2: eine schematische Schnittdarstellung einer Anordnung zum Mehrlagenlaminieren gemäß Stand der Technik,
- Figur 3: eine schematische Schnittdarstellung einer erfindungsgemäßen Anordnung zum Einlagenlaminieren, und
- Figuren 4 bis 7: jeweils schematische Explosionsdarstellungen im Schnitt von Ausführungsformen erfindungsgemäßer Folienverbundmaterialien vor (a) und nach (b) dem Einsetzen verschiedener unregelmäßig geformter Bauteile.

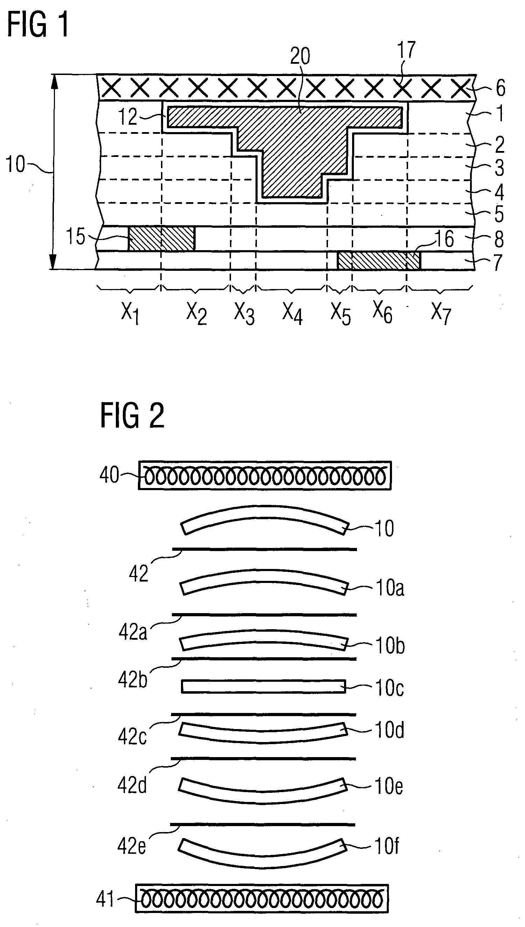

Figur 1 zeigt einen typischen Aufbau eines Folienverbundmaterials mit einem eingebetteten elektronischen Bauteil, wie es für flächige tragbare Datenträger, insbesondere für - an sich bekannte - Chipkarten im Kreditkartenformat oder in einem anderen Format verwendet wird.

Das Folienverbundmaterial der dargestellten Ausführungsform weist einen Kern auf, der aus der Trägerfolie 5 und vier Aufnahmefolien 1, 2, 3, 4 besteht. Jede der Aufnahmefolien weist eine Ausnehmung auf, wobei die Aufnahmefolien so aufeinander gestapelt sind, dass ihre Ausnehmungen in Kombination das Bauteil 20 aufnehmen können. Die Ausnehmungen sind so geformt, dass eine möglichst passergenaue Aufnahme des Bauteils 20 möglich ist.

Das Bauteil 20 kann insbesondere unregelmäßig geformt sein und einen Querschnitt aufweisen, dessen Oberseite plan ist und der zum Kern hin ein Tiefenprofil mit unterschiedlichen Höhen zeigt. Das Tiefenprofil kann dabei über die Fläche des Bauteils 20 variieren. Bauteile dieser Art sind z.B. vorgefertigte Funktionsgruppen, die aus einem Substrat bestehen, auf dem z.B. ein Display, eine Batterie und verschiedene ICs angeordnet sind, die über das Substrat elektrisch verbunden sind. Auch in der dargestellten Ausführungsform wird von einem solchen unregelmäßig geformten Bauteil 20 ausgegangen, d.h. in dem Folienverbundmaterial gibt es Bereiche x₂, x₃, x₄, x₅, und x₆, in denen das Bauteil 20 jeweils eine andere Dicke aufweist und daher unterschiedlich tief in den Kern eingebettet werden muss. In den Bereichen x₁ und x₇ des Folienverbundmaterials befindet sich kein Bauteil 20.

Einzubettende Bauteile mit variierender Dicke erfordern zu ihrer Aufnahme Ausnehmungen mit variierender Tiefe. Derartige Ausnehmungen sind am einfachsten zu realisieren durch Stapeln einer geeigneten Anzahl von Aufnahmefolien, die jeweils eine an die Abmessungen des einzubettenden Bauteils angepasste Dicke und Ausnehmung aufweisen. Aber auch auf diese Weise ist in der Praxis keine hinreichend passergenaue Aufnahme komplex geformter Bauteile möglich, was in Figur 1 durch den Spalt 12 angedeutet wird. In dem laminierten Folienverbundmaterial befinden sich aufgrund der mangelnden Passergenauigkeit Hohlräume mit eingeschlossener Luft, was zum einen optisch unbefriedigend ist und zum anderen, schlimmer noch, zu einer Delaminierung des Folienverbunds führen kann.

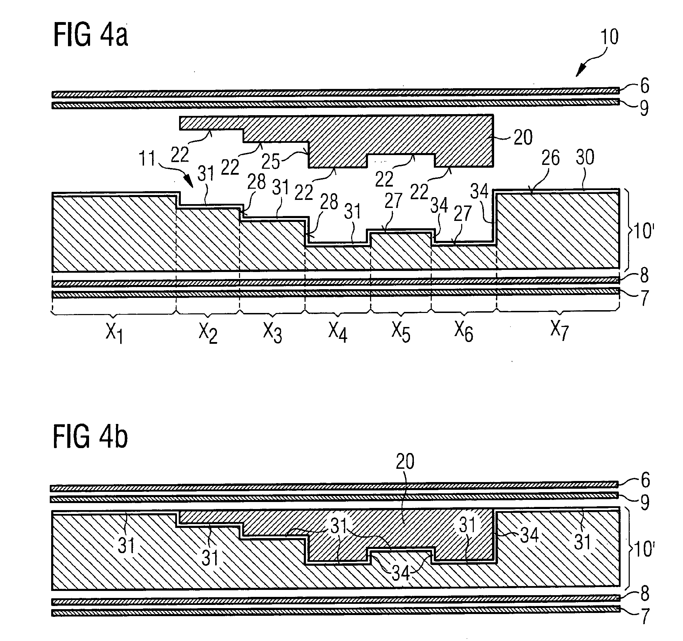

Erfindungsgemäß wird die mangelnde Passergenauigkeit zwischen Ausnehmung und dem einzubettenden Bauteil durch ein Ausgleichsmaterial ausgeglichen, das im Zusammenhang mit den Figuren 4 bis 7 näher beschrieben werden wird.

Ein erfindungsgemäßes Folienverbundmaterial weist neben der Trägerfolie 5, einer oder mehreren Aufnahmefolien 1, 2, 3, 4 zur Aufnahme des Bauteils mindestens noch eine Deckfolie 6 zum Abdecken des Bauteils auf. In der in Figur 1 dargestellten Ausführungsform sind auf die Trägerfolie 5 noch zwei weitere Folien 7, 8 auflaminiert, wobei die Folien 6, 7 die Außenfolien des Folienstapels 10 bilden. In der dargestellten Ausführungsform weist die Deckfolie bzw. Außenfolie 6 Designmerkmale 17 auf, die Zwischenfolie 8 weist Sicherheitsmerkmale 15, beispielsweise ein Fluoreszenzmerkmal, auf und die Deckfolie 7 weist ein Sicherheitsmerkmal 16 auf, beispielsweise ein Hologramm. Es versteht sich, dass der Folienstapel 10 weitere Folien, gegebenenfalls mit Sicherheitsmerkmalen, Designmerkmalen, Strukturierungen, Aufdrucken, etc. aufweisen kann.

Figur 2 zeigt schematisch einen Aufbau zum Laminieren von Folienverbundmaterialien gemäß Stand der Technik. Hierbei werden mehrere Folienstapel, in der dargestellten Ausführungsform sieben Folienstapel 10,10a,10b, 10c, 10d, 10e, 10f, die durch Zwischenbleche 42, 42a, 42b, 42c, 42d, 42e voneinander getrennt werden, gleichzeitig laminiert. Wegen des gleichzeitigen Laminierens mehrerer Lagen von Folienstapeln spricht man vom Mehrlagenlaminieren. Die mehreren Folienstapel werden zwischen Presswerkzeugen 40, 41, die gleichzeitig als Heizplatten ausgebildet sind, unter erhöhtem Druck und erhöhter Temperatur miteinander laminiert.

Bei dem gleichzeitigen Laminieren mehrerer Lagen von Folienstapeln, die durch Zwischenbleche voneinander getrennt übereinander gestapelt sind, ergibt sich beim Laminieren zwangsläufig ein Temperaturgradient, d.h. eine Einzelfolie wird um so stärker erwärmt, je näher sie einer Heizplatte ist. Dies führt bei dem fertigen Folienverbundmaterial zu Verwölbungen, wobei die Verwölbungstendenzen in Abhängigkeit von der Lage eines Folienstapels zur Heizplatte in Figur 2 dargestellt sind. Lediglich das Verbundmaterial 10c, das von beiden Heizplatten gleich weit entfernt ist, hat die angestrebte flache Form. Die übrigen Folienverbundmaterialien sind mehr oder weniger stark gewölbt, was sie für viele Zwecke unbrauchbar macht, beispielsweise für eine Verwendung als Displaykarten.

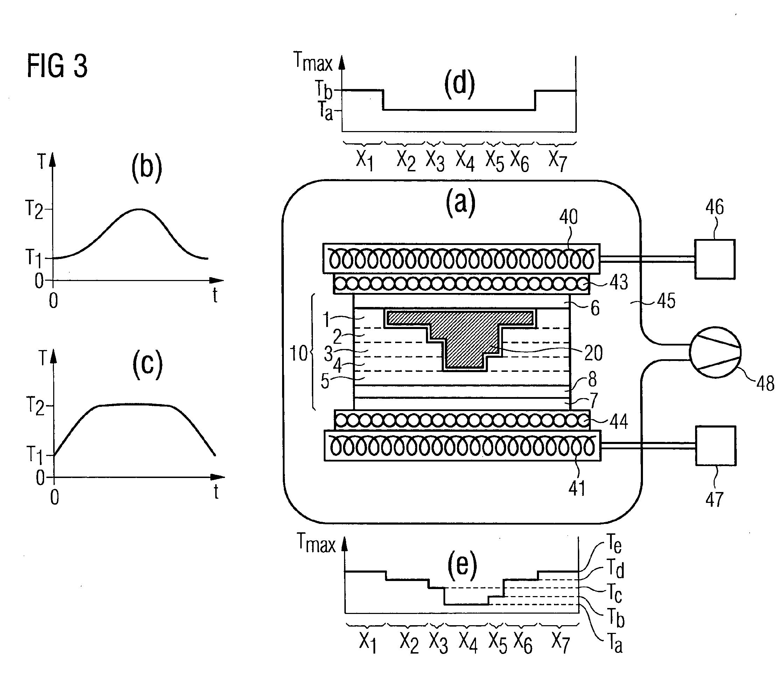

Figur 3 zeigt eine schematische Schnittdarstellung einer erfindungsgemäßen Anordnung zum Laminieren von Folienverbundmaterialien mit eingebettetem unregelmäßig geformtem Bauteil. Das Folienverbundmaterial entsteht durch Laminieren eines Folienstapels 10, der wie der in Figur 1 gezeigte Folienstapel aufgebaut ist. In einer passend geformten Ausnehmung befindet sich, ebenfalls wie in Figur 1 dargestellt, ein unregelmäßig geformtes Bauteil 20. Die Sicherheitsmerkmale 15,16 und die Designmerkmale 17 sind in Figur 3 weggelassen. Es versteht sich, dass das Bauteil 20 den Hohlraum zwischen den Folien 1, 2, 3, 4 einerseits und den Folien 5, 6 andererseits so vollständig wie möglich ausfüllt. In dem Bereich zwischen dem Bauteil 20 und den Folien 1, 2, 3, 4 bzw. 5 befindet sich ein Ausgleichsmaterial (in Figur 3 nicht dargestellt), das beim Ansteigen der Temperatur während des Laminierungsvorgangs schneller erweicht bzw. fließfähig oder beweglich wird als die angrenzenden Folien und dadurch alle Zwischenräume zwischen dem Bauteil 20 und den angrenzenden Folien vollständig und perfekt ausfüllt.

Bei dem Ausgleichsmaterial handelt es sich um einen thermisch aktivierbaren Klebstoff oder um eine Folie aus einem thermoplastischen Polymer oder aus einem thermoplastischen Elastomer. Das Ausgleichsmaterial befindet sich mindestens in den Bereichen zwischen Bauteil und Folien, in denen das Bauteil auf den Folien aufliegt. In den Bereichen, in denen die Deckfolie 6 auf dem Bauteil 20 aufliegt, kann ein zusätzlicher Klebstoff vorgesehen werden.

Die in Figur 3 dargestellte Ausführungsform verwirklicht sämtliche essentiellen sowie bevorzugten Merkmale des erfindungsgemäßen Verfahrens. Wie in Figur 3a dargestellt, befindet sich die Laminierpresse in einer Vakuumkammer 45, die mittels einer Pumpe 48 evakuiert werden kann. Durch das Evakuieren vor und während des Laminiervorgangs werden eventuelle Lufteinschlüsse in dem Raum zwischen Bauteil 20 und den umgebenden Folien effizient entfernt.

In einer alternativen Ausgestaltung kann die Laminierpresse so ausgeführt sein, dass ein Vakuum nur direkt am Laminiergut entsteht. Die kann z.B. erreicht werden, indem die Heizplattenanordnung mit entsprechenden Dichtungen versehen wird. Eine Evakuierung der gesamten Laminierpresse und eine Vakuumkammer 45 sind dann nicht erforderlich. Der Evakuierungsraum kann vielmehr klein gehalten werden und erlaubt eine kurze Evakuierungszeit. Der Evakuierungsvorgang erfolgt dabei zweckmäßig unmittelbar vor dem Laminieren, d.h. bevor die Verpressung in der Heizstation beginnt.

Die Laminierpresse weist zwei Pressplatten 40, 41 auf, die gleichzeitig als Heizplatten dienen. Die Platte 40 ist durch eine Heizung 46 beheizbar, und die Platte 41 ist durch eine Heizung 47 beheizbar. Die Temperaturen der beiden Heizplatten können also unabhängig voneinander geregelt werden. Eine unabhängige Temperaturführung ist insofern vorteilhaft, als dadurch der unregelmäßigen Form des einzubettenden Bauteils sowie seinem Abstand von den Heizplatten Rechnung getragen werden kann. Die Temperaturführung kann zeitlich und/ oder örtlich, bevorzugt zeitlich und örtlich, unabhängig gestaltet werden.

Ein Beispiel für eine zeitlich unabhängige Temperaturführung ist in den Figuren 3b und 3c dargestellt. Figur 3b zeigt das Temperaturprofil der Heizplatte 40 und Figur 3c zeigt das Temperaturprofil der Heizplatte 41. Wie aus Figur 3b ersichtlich ist, wird die Heizplatte 40 beginnend bei Raumtemperatur T₁ langsam auf eine Maximaltemperatur T₂ aufgeheizt, kurzzeitig bei der Maximaltemperatur T₂ gehalten, und dann langsam wieder auf Raumtemperatur abgekühlt. Dem gegenüber wird die Heizplatte 41 (Figur 3c) beginnend bei Raumtemperatur T₁ rasch auf eine Maximaltemperatur T₂ aufgeheizt, längere Zeit bei der Maximaltemperatur T₂ gehalten, und dann wieder auf Raumtemperatur T₁ abgekühlt. Die Maximaltemperatur T₂ der Heizplatte 41 ist dabei höher als die Maximaltemperatur T₂ der Heizplatte 40. Durch diese unterschiedliche Temperaturführung wird der Folienstapel 10 an der Seite, an der sich das Bauteil 20 oberflächennah befindet, nur kurzzeitig erhitzt und nur auf die minimal mögliche Temperatur, die für das Laminieren der Folien zwingend erforderlich ist. An der anderen Seite, an der sich nicht nur eine Folie, sondern drei Folien zwischen dem Bauteil 20 und der Heizplatte der Laminierpresse befinden, das Bauteil 20 also weniger gefährdet ist, wird für einen längeren Zeitraum und höher erhitzt, was zum einen für einen guten Laminatverbund sorgt und zum anderen auch gewährleistet, dass das Ausgleichsmaterial ausreichend lange in einem erweichten Zustand bleibt, so dass eingeschlossene Luft durch das Evakuieren leicht entfernt werden kann.

Die Figuren 3d und 3e zeigen eine örtlich unabhängige Temperaturführung, wobei Figur 3d das Temperaturprofil der Heizplatte 40 zeigt und Figur 3e das Temperaturprofil der Heizplatte 41 zeigt. Die Heizplatten 40,41 sind jeweils so ausgelegt, dass ihre Temperaturen in unterschiedlichen Teilbereichen getrennt voneinander geregelt werden können. Die Teilbereiche, deren Temperaturen unabhängig voneinander geregelt werden können, geben dabei die Oberflächenkonturen (bzw. Unterseitenkonturen) des Bauteils 20 wieder, d.h. die Abstände des Bauteils von der Heizplatte 41. Wie im Zusammenhang mit Figur 1 erläutert wurde, gibt es in dem Folienstapel 10 Bereiche x₂ bis x₆, in denen das Bauteil 20 jeweils eine andere Dicke aufweist. Außerdem gibt es Bereiche x₁ und x₇, in denen sich kein Bauteil befindet. Diesen Bereichen x₁ bis x₇ des Folienstapels 10 entsprechen Bereiche x₁ bis x₇ der Heizplatten 40,41. Wie aus Figur 3d ersichtlich ist, wird die Heizplatte 40 in den Teilbereichen x₂ bis x₆ auf eine Maximaltemperatur Tₐ aufgeheizt, während sie in den Teilbereichen x₁ und x₇ auf eine Maximaltemperatur T_{b} aufgeheizt wird, die höher ist als die Temperatur Tₐ. Dadurch wird in den Teilbereichen x₁ und x₇ ein optimaler Laminatverbund erreicht, während das Bauteil 20 in den Teilbereichen x₂ bis x₆ geschont wird. Zur Erzielung einer guten Haftung zwischen dem Bauteil 20 und der Deckfolie 6 kann auf das Bauteil 20 ein Klebstoff aufgetragen werden.

Die Heizplatte 41 wird, wie aus Figur 3e ersichtlich, in dem Teilbereich x₄ auf eine Maximaltemperatur Tₐ aufgeheizt, in dem Teilbereich x₅ auf eine Maximaltemperatur T_{b} aufgeheizt, in dem Teilbereich x₃ auf eine Maximaltemperatur T_{c} aufgeheizt, in den Teilbereichen x₂ und x₆ auf eine Maximaltemperatur T_{d} aufgeheizt und in den Teilbereichen x₁ und x₇ auf eine Maximaltemperatur Tₑ aufgeheizt. Die Temperatur Tₐ kann dabei höher sein als die Temperatur Tₐ der Heizplatte 40, und die Temperatur Tₑ kann höher sein als die Temperatur T_{b} der Heizplatte 40. So kann die jeweilige Maximaltemperatur in optimaler Weise an die jeweilige Entfernung des Bauteils 20 von der Heizplatte angepasst werden und das Bauteil möglichst wenig thermisch belastet werden.

Zwischen einer der Heizplatten und dem Folienstapel 10 oder beidseitig des Folienstapels 10 können, wie in Figur 3a dargestellt, Presspolster 43,44 vorgesehen werden. Die Presspolster bzw. Wärmedruckpolster vergleichmäßigen den ausgeübten Druck und schonen dadurch druckempfindliche Bauteile. Außerdem unterstützen sie eine gezielte Steuerung des Wärmeübergangs von den Heizplatten auf den Folienstapel und schonen dadurch temperaturempfindliche Bauteile. Gleichmäßiger Druck und gezielt gesteuerter Wärmeübergang dienen überdies dazu, ein Verwölben des gebildeten Folienverbundmaterials zu vermeiden.

Die Tendenz der Folienverbundmaterialien zum Verwölben wird erfindungsgemäß auch dadurch minimiert, dass der Laminierungsprozess bevorzugt als Einlagenlaminierverfahren durchgeführt wird, d.h., es werden nicht gleichzeitig mehrere Folienstapel laminiert, die durch Zwischenbleche voneinander getrennt aufeinander gestapelt sind. Vielmehr wird zwischen den Presswerkzeugen 40, 41 nur ein einziger Folienstapel 10 angeordnet und laminiert. Bei entsprechender Auslegung der Laminierpresse können jedoch mehrere Folienstapel nebeneinander laminiert werden.

Die Figuren 4 bis 7 zeigen jeweils verschiedene Ausgleichsmaterialien 30 sowie ihre Aufbringung bzw. Einbringung in einen Folienstapel 10 und ihr Verhalten beim Laminieren im Zusammenhang mit verschiedenen unregelmäßig geformten Bauteilen 20, wobei die Figuren 4a, 5a, 6a und 7a jeweils den Zustand vor dem Laminieren zeigen und die Figuren 4b, 5b, 6b und 7b jeweils den Zustand nach dem Laminieren zeigen.

In den dargestellten Ausführungsformen bestehen die Folienstapel 10 jeweils aus den Kernfolien 1, 2, 3, 4, 5, den Zwischenfolien 8, 9, und den Außenfolien 6, 7, aber es sind selbstverständlich auch andere Aufbauten möglich. Die Aufnahmefolien 1, 2, 3, 4, und die Trägerfolie 5 sind wegen der besseren Erkennbarkeit der Ausnehmung 11 jeweils gemeinsam als Kernfolienstapel 10' dargestellt, auch im Zustand vor dem Laminieren, während die Zwischenfolien 8, 9 und die Außenfolien 6, 7 (ebenfalls der besseren Übersichtlichkeit halber) voneinander und von dem Kernfolienstapel 10' getrennt dargestellt sind, auch im Zustand nach dem Laminieren.

Teilflächenbereiche innerhalb des Folienstapels 10 bzw. innerhalb des Folienverbundmaterials werden, in Abhängigkeit von der Struktur des Bauteils 20, wie in Figur 1 ebenfalls mit x₁ bis x₇ bezeichnet. Die Oberfläche des Bauteils 20, mit der das Bauteil in die Ausnehmung 11 des Kernfolienstapels 10' eingesetzt wird, wird als die Unterseite des Bauteils bezeichnet, während die Oberfläche des Bauteils, die der Zwischenfolie 9 zugewandt ist, als die Oberseite des Bauteils bezeichnet wird.

In Figur 4 dargestellt ist ein Bauteil 20 mit einer Unterseite 21, die horizontale Bereiche 22 und vertikale Bereiche 25 aufweist. Bei dem Bauteil 20 kann es sich zum Beispiel um eine zum Einbau in einen Kartenkörper im Smart Card-Format bestimmte Funktionsgruppe handeln, die ein zur Oberseite hin planes Substrat umfasst, auf dem zur Unterseite hin z.B. ein Display, eine Batterie, ein Schalter sowie ein oder mehrere Steuer-IC angeordnet sind. Die Elemente können dabei über in dem Substrat ausgebildete Leiterbahnen verbunden sein. Das Substrat kann in diesem Fall eine Größe haben, die etwas kleiner ist als die für die Smart Card vorgegebenen Außenabmessungen; ein Schalter für eine Smart Card hat typischerweise Abmessungen im Bereich von 10 x 10 mm, ein IC z.B.1 x 1 mm. Die in die Tiefe weisende Höhe der Elemente auf dem Substrat liegt typischerweise in einem Bereich von 50 bis 600 µm.

Der Kontur des Bauteils 20 entsprechend hat der Kernfolienstapel 10' eine Oberfläche 26 mit horizontalen Bereichen 27 und vertikalen Bereichen 28, die der Strukturierung der Unterseite 21 des Bauteils 20 angepasst sind, wobei die Teilflächenbereiche x₄ und x₆ gegenüber dem Teilflächenbereich x₅ abgesenkt sind.

Eine derartige Oberflächenstrukturierung der Aufnahmefolie bzw. des Aufnahmefolienstapels erfordert entweder ein sehr passergenaues Einlegen eines Folienstücks geeigneter Abmessungen in eine Ausnehmung, die sich über die Bereiche x₄, x₅ und x₆ erstreckt, oder eine Kombination aus geprägten und ausgeschnittenen Ausnehmungen in dem Kernfolienstapel. Beispielsweise kann der Kernfolienstapel 10' aufgebaut werden aus einer Trägerfolie, in die die Ausnehmungen x₄ und x₆ eingeprägt sind, auf die eine Aufnahmefolie mit einer Ausnehmung in den Bereichen x₄, x₅, x₆ aufgelegt wird, gefolgt von einer Aufnahmefolie mit einer Ausnehmung in den Bereichen x₃ bis x₆, wiederum gefolgt von einer Aufnahmefolie mit einer Ausnehmung in den Bereichen x₂ bis x₆.

Wie in Figur 4a gezeigt ist, ist die gesamte Oberfläche 26 des Kernfolienstapels 10' sowohl innerhalb als auch außerhalb der Ausnehmung 11 von einem Ausgleichsmaterial 30 bedeckt. Das Ausgleichsmaterial weist horizontale Bereiche 31 und vertikale Bereiche 34, entsprechend der Oberflächenstrukturierung der Ausnehmung 11, auf. Horizontale Bereiche sind Bereiche im wesentlichen in der Erstreckungsrichtung der Folienlagen, und vertikale Bereiche sind im wesentlichen senkrecht zur Erstreckungsrichtung der Folienlagen.

In der dargestellten Ausführungsform ist das Ausgleichsmaterial 30 ein thermisch aktivierbarer Klebstoff, beispielsweise ein Heißsiegelklebstoff. Damit der Klebstoff an den vertikalen Bereichen der Ausnehmung 11 haftet, wird bevorzugt ein hochviskoser Klebstoff verwendet oder ein Klebstoff, der heiß aufgetragen wird und nach dem Abkühlen einen Film bildet. Der Klebstoff muss auf das Material der übrigen Folien, zumindest auf das Material jener Folien, mit denen er in Kontakt kommt, abgestimmt werden. Er muss bei einer niedrigeren Temperatur als der Erweichungstemperatur dieser Folien thermisch aktiviert werden, d.h. fließfähig werden und die an ihn angrenzenden Teile miteinander verkleben. Beim Abkühlen, wenn der Klebstoff fest wird, entsteht so ein fester Verbund zwischen dem Bauteil 20 und dem Kernfolienstapel 10'. Dieser Zustand, d.h. der Zustand nach dem Abkühlen des Klebstoffs, ist in Figur 4b dargestellt. Der Klebstoff verbindet das Bauteil 20 sowohl in den horizontalen Bereichen als auch in den vertikalen Bereichen mit den Kernfolien und füllt sämtliche Lücken und Spalten oder sonstigen Hohlräume, die sich durch eine mangelnde Passergenauigkeit von Bauteil 20 und Ausnehmung 11 ergeben, vollständig aus. Der Klebstoff verbindet auch gleichzeitig den Kernfolienstapel 10' mit der Zwischenfolie 9, jedenfalls außerhalb der Ausnehmung 11. Wenn eine vollständige Verklebung gewünscht wird, muss auch auf die Oberseite des Bauteils 20 und/ oder auf die dem Bauteil 20 zugewandte Oberfläche der Zwischenfolie 9 ein Klebstoff aufgetragen werden.

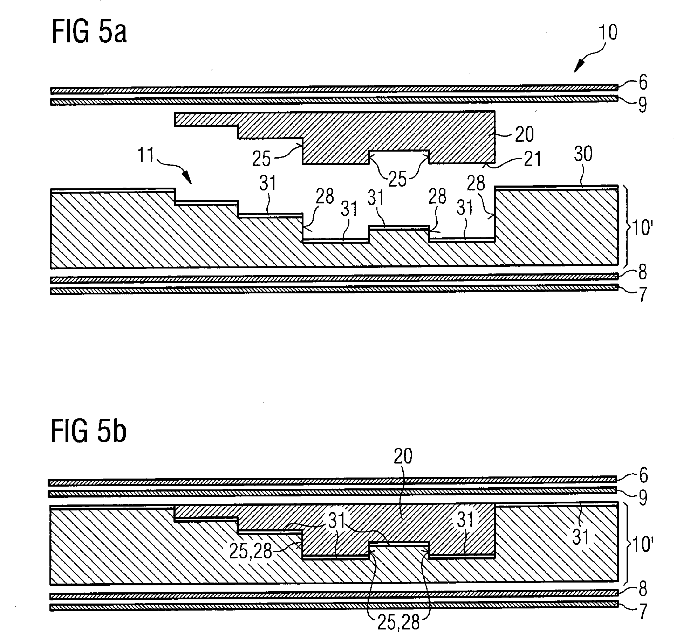

Die in Figur 5 dargestellte Ausführungsform ist identisch mit der in Figur 4 dargestellten Ausführungsform mit der Ausnahme, dass sich der Klebstoff 30 hier ausschließlich auf den horizontalen Bereichen 27 der Oberfläche 26 des Kernfolienstapels 10' befindet, nicht aber auf den vertikalen Bereichen 28. Zur Verklebung mit dem Bauteil 20 stehen daher nur die horizontalen Flächenbereiche 31 des Klebstoffs zur Verfügung. Bei dieser Ausführungsform kann auch ein dünnflüssiger Klebstoff verwendet werden, der beispielsweise als Lösung, Emulsion oder Suspension aufgetragen werden kann. Durch Verdampfen des Lösungsmittels oder Dispergiermittels entstehen dann die Klebstoffbereiche 31. Natürlich gilt auch hier, dass der Klebstoff bei niedrigerer Temperatur als dem Erweichungspunkt der angrenzenden Folien fließfähig werden muss.

Figur 5b zeigt wiederum den Zustand nach dem Laminieren. Dargestellt ist eine Ausführungsform, in der nur sehr wenig Klebstoff verwendet wurde, und das Bauteil 20 nur an den horizontalen Bereichen der Unterseite mit dem Kernfolienstapel verklebt ist. An den vertikalen Bereichen 25 des Bauteils 20 bzw. an den vertikalen Bereichen 28 der Ausnehmung 11 befindet sich kaum Klebstoff, was bei hoher lateraler Passergenauigkeit ausreichend ist. Wenn eine größere Menge Klebstoff aufgetragen wird, d.h. wenn die Klebstoffbereiche 31 dicker sind, wird bei der thermischen Aktivierung des Klebstoffs der fließfähige Klebstoff von den Bereichen 31 auch in die vertikalen Bereiche hineingedrückt und schließt diese, so dass derselbe Zustand erreicht wird, der in Figur 4b dargestellt ist. Dies ist dann erforderlich, wenn die laterale Passergenauigkeit gering ist.

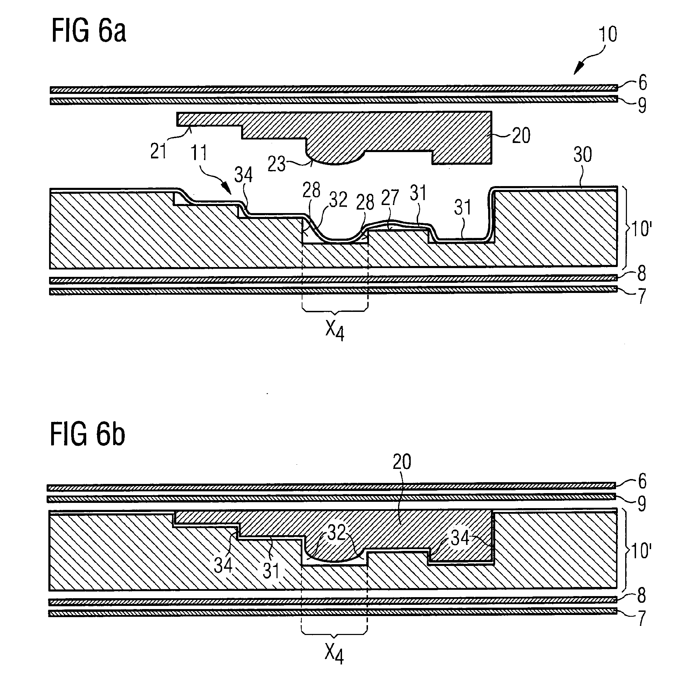

Figur 6 zeigt eine Ausführungsform bei der als Ausgleichsmaterial 30 eine hochflexible Folie, beispielsweise eine Folie aus einem thermoplastischen Elastomer, verwendet wird. Die Folie wird in die Ausnehmung 11 eingelegt (Figur 6a) und erstreckt sich über die horizontalen Bereiche 27 und die vertikalen Bereiche 28 der Ausnehmung 11 sowie über die der Zwischenfolie 9 gewandte Oberfläche des Kernfolienstapels 10'. Das Bauteil 20 unterscheidet sich insofern von den in den Figuren 4 und 5 dargestellten Bauteilen, als es an seiner Unterseite einen gerundeten Flächenbereich 23 aufweist. Es ist praktisch unmöglich, derartige gerundete Flächen in der Ausnehmung 11 nachzubilden. Die Ausnehmung 11 besitzt daher an der entsprechenden Stelle (mit x₄ bezeichnet) eine horizontale Oberfläche, was zu beträchtlichen Passerproblemen zwischen Bauteil und Ausnehmung führt. Diese mangelhafte Passerung muss durch das Ausgleichsmaterial 30, insbesondere durch dessen im Rundungsbereich des Bauteils 20 befindlichen Teilbereich 32, ausgeglichen werden. Dieser ausgeglichene Zustand ist in Figur 6b dargestellt.

Figur 6b zeigt den Zustand nach dem Laminieren. Da als Ausgleichsmaterial 30 eine Folie verwendet wird, deren Erweichungstemperatur niedriger ist als die Erweichungstemperatur der angrenzenden Folienmaterialien, wird das Material der Folie 30 beim Laminieren im fließfähigen Zustand in alle Hohlräume der Ausnehmung 11, die nicht von dem Bauteil 20 ausgefüllt werden, gedrückt. Dieses Fließen wird zusätzlich unterstützt durch das angelegte Vakuum, durch das jegliche Luft aus diesen Hohlräumen entfernt wird, so dass das fließfähige Material der Ausgleichsfolie 30 in die Hohlräume hineingezogen wird. So können auch größere Hohlräume bei erheblichen Passerungenauigkeiten problemlos aufgefüllt werden.

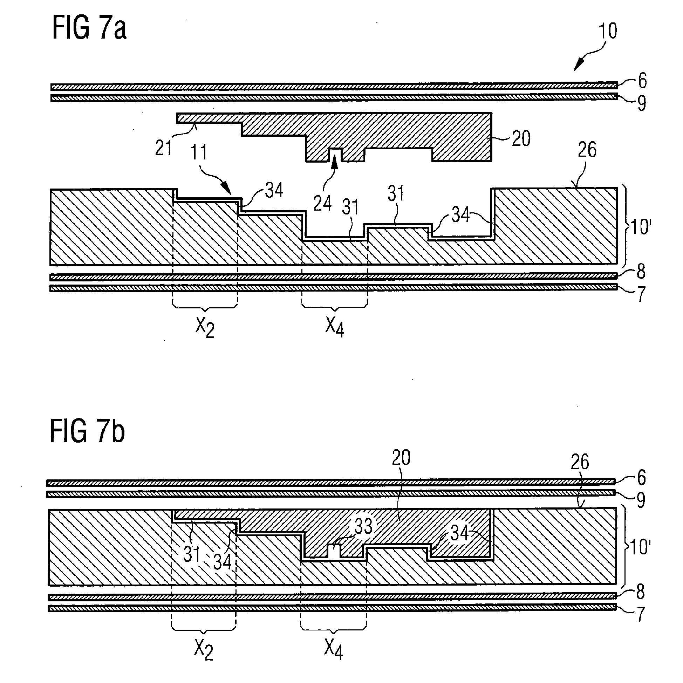

Figur 7 zeigt eine Ausführungsform, die mit der in Figur 4 dargestellten Ausführungsform identisch ist mit der Ausnahme, dass sich der Klebstoff 30 ausschließlich innerhalb der Ausnehmung 11 befindet, nicht jedoch an den Oberflächenbereichen 26 des Kernfolienstapels 10' außerhalb der Ausnehmung 11. Alternativ oder zusätzlich könnte der Klebstoff 30 natürlich auch auf die Unterseite 21 des Bauteils 20 aufgetragen werden. Außerdem weist in der Ausführungsform der Figur 7 das Bauteil 20, im Unterschied zu der in Figur 4 dargestellten Ausführungsform, an seiner Unterseite einen horizontalen Bereich mit einer Lücke 24 auf. Die Lücke 24 hat in horizontaler Richtung so geringe Abmessungen, dass sie in der Ausnehmung 11 nicht spiegelbildlich nachgebildet werden kann. Der entsprechende Oberflächenbereich der Ausnehmung 11 (in Figur 7a mit x₄ bezeichnet) ist daher im wesentlichen horizontal.

Wenn der Folienstapel 10 mit dem Bauteil 20 in der Ausnehmung 11 laminiert wird, wird bei steigender Temperatur zunächst die Aktivierungstemperatur des Klebstoffs erreicht, bei der der Klebstoff erweicht und fließfähig wird, während die angrenzenden Folien noch fest und weitgehend formstabil sind. Der fließfähige Klebstoff passt sich an die Konturen der Oberflächen, zwischen denen er eingeschlossen ist, an und füllt jegliche Hohlräume zwischen der Oberfläche der Ausnehmung 11 und der Unterseite des Bauteils 20. Dies gilt auch dann, wenn das Bauteil 20 feinste Strukturen wie die Lücke 24 aufweist. Unterstützt durch das während des Laminierungsvorgangs herrschende Vakuum dringt das Ausgleichsmaterial 30 auch in feinste Strukturierungen wie schmale Rinnen oder kleinste lochartige Strukturen des Bauteils 20 ein. Nach dem Laminieren und Abkühlen des Folienverbundmaterials, wenn das Ausgleichsmaterial wieder fest geworden ist, ist somit die Lücke 24 vollständig von Ausgleichsmaterial 33, in der in Figur 7b dargestellten Ausführungsform von Klebstoff 33, gefüllt.

Bisweilen ist es erforderlich, Bauteile mit in einem Kern bzw. in einem Folienstapel 10 vorhandenen elektrisch leitfähigen Strukturen elektrisch leitfähig zu verbinden. Soll eine derartige Verbindung ausgebildet werden ist es zweckmäßig, zuerst die elektrisch leitfähigen Strukturen auszubilden und die zur elektrisch leitfähigen Verbindung mit dem Bauteil 20 vorgesehenen Bereiche der elektrisch leitfähigen Strukturen nicht mit Ausgleichsmaterial 30 zu bedecken. Bei Klebstoffen als Ausgleichsmaterial ist es manchmal auch möglich, die elektrisch leitfähigen Strukturen auf der Klebstoffschicht auszubilden. Beispielsweise könnte sich in dem in Figur 7a mit x₂ bezeichneten Bereich eine elektrisch leitfähige Struktur auf der Oberfläche 26 des Kernfolienstapels 10' befinden. Um diese elektrisch leitfähige Struktur mit dem Bauteil 20 elektrisch leitfähig zu verbinden, müsste entweder der Bereich x₂ ausgleichsmaterialfrei bleiben, oder die elektrisch leitfähige Struktur müsste in dem Bereich x₂ auf dem festen Klebstoff ausgebildet werden.

## Patentansprüche

1. Verfahren zur Herstellung eines Folienverbundmaterials mit einem in das Folienverbundmaterial eingebetteten Bauteil (20), folgende Schritte aufweisend:
(a) Bereitstellen einer Trägerfolie (5), mindestens einer Aufnahmefolie (1, 2, 3, 4), einer Deckfolie (6) und des Bauteils (20), wobei die mindestens eine Aufnahmefolie (1, 2, 3, 4) eine Ausnehmung (11) aufweist, die hinsichtlich Form und Größe dazu geeignet ist, das Bauteil (20) im wesentlichen passergenau aufzunehmen,
(b) Auflegen der mindestens einen Aufnahmefolie (1, 2, 3, 4) auf die Trägerfolie (5),
(c) Einsetzen des Bauteils (20) in die Ausnehmung (11) der mindestens einen Aufnahmefolie unter Bildung eines Teil-Folienstapels,
(d) Abdecken des Bauteils (20) durch Auflegen der Deckfolie (6) auf den in Schritt (c) gebildeten Teil-Folienstapel unter Bildung eines Folienstapels (10), und
(e) Laminieren des in Schritt (d) gebildeten Folienstapels (10) durch Heißpressen unter Bildung des Folienverbundmaterials, wobei vor dem Einsetzen des Bauteils (20) in die Ausnehmung (11) der mindestens einen Aufnahmefolie (1, 2, 3, 4) ein Ausgleichsmaterial (30) in die Ausnehmung (11) eingebracht und/ oder auf in die Ausnehmung einzusetzende Oberflächenbereiche des Bauteils aufgebracht wird,
**dadurch gekennzeichnet**,
das Ausgleichsmaterial (30) bei einer niedrigeren Temperatur thermisch aktiviert wird als die Folien des Folienstapels (10), und
das Laminieren des Folienstapels (10) zu dem Folienverbundmaterial unter Vakuum durchgeführt wird, und
zwei oder mehr Aufnahmefolien (1, 2, 3, 4) mit jeweils mindestens einer Ausnehmung zur Aufnahme eines Teils des Bauteils (20) aufeinandergestapelt werden, wobei alle Ausnehmungen der Aufnahmefolien (1, 2, 3, 4) gemeinsam die Ausnehmung (11) zur im wesentlichen passergenauen Aufnahme des Bauteils (20) bilden.

2. Verfahren nach Anspruch 1, **dadurch gekennzeichnet, dass** ein unregelmäßig geformtes Bauteil (20) in die Ausnehmung (11) der mindestens einen Aufnahmefolie (1, 2, 3, 4) eingesetzt wird.

3. Verfahren nach einem der vorhergehenden Ansprüche , **dadurch gekennzeichnet, dass** der Folienstapel (10) beim Laminieren von Heizeinrichtungen (40, 41) an seinen beiden Außenfolien (6, 7) erhitzt wird, wobei das Erhitzen an der einen Außenfolie (6) und an der anderen Außenfolie (7) jeweils mit Temperaturprofilen erfolgt, die sich zeitlich und/ oder örtlich voneinander unterscheiden.

4. Verfahren nach einem der vorhergehenden Ansprüche, **dadurch gekennzeichnet, dass** der Folienstapel (10) beim Laminieren von Heizeinrichtungen (40,41) an seinen beiden Außenfolien (6, 7) erhitzt wird, wobei die Wärmeübertragung von der einen der Heizeinrichtungen (40,41) auf die eine der Außenfolien (6, 7) durch Einlegen eines Wärmedruckpolsters (43, 44) zwischen die Heizeinrichtung (40, 41) und die Außenfolie (6, 7) gezielt gesteuert wird und optional auch die Wärmeübertragung von der anderen der Heizeinrichtungen (40, 41) auf die andere der Außenfolien (6, 7) durch Einlegen eines Wärmedruckpolsters (43, 44) zwischen die Außenfolie und die Heizeinrichtung gezielt gesteuert wird.

5. Verfahren nach einem der vorhergehenden Ansprüche, **dadurch gekennzeichnet, dass** das Ausgleichsmaterial (30) die Ausnehmung (11) der mindestens einen Aufnahmefolie (1, 2, 3, 4) vollständig auskleidet und optional mindestens einen Teilbereich der von der Trägerfolie (5) abgewandten Oberfläche der mindestens einen Aufnahmefolie (1, 2, 3, 4) bedeckt.

6. Verfahren nach einem der vorhergehenden Ansprüche, **dadurch gekennzeichnet, dass** das Ausgleichsmaterial (30) mindestens einen Teilbereich der Ausnehmung (11) und/ oder der von der Trägerfolie (5) abgewandten Oberfläche der mindestens einen Aufnahmefolie (1, 2, 3, 4), in dem das Bauteil (20) mit einem anderen Bauteil verbunden werden soll, freilässt.

7. Verfahren nach einem der vorhergehenden Ansprüche, **dadurch gekennzeichnet, dass** als Ausgleichsmaterial (30) ein thermisch aktivierbarer Klebstoff verwendet wird, wobei die Aktivierungstemperatur des Klebstoffs niedriger ist als die Erweichungstemperatur der an den Klebstoff angrenzenden Folien (1, 2, 3, 4, 5, 6).

8. Verfahren nach einem der vorhergehenden Ansprüche, **dadurch gekennzeichnet, dass** als Ausgleichsmaterial (30) eine Folie aus einem Thermoplasten oder aus einem thermoplastischen Elastomer verwendet wird, wobei die Ausgleichsmaterial-Folie eine Erweichungstemperatur hat, die niedriger ist als die Erweichungstemperatur der an die Ausgleichsmaterial-Folie angrenzenden Folien (1, 2, 3, 4, 5, 6).

9. Folienverbundmaterial aufweisend eine Trägerfolie (5), mindestens eine Aufnahmefolie (1, 2, 3, 4) mit einer Ausnehmung (11), eine Deckfolie (6) und optional mindestens eine weitere Folie (7, 8, 9), und ein Bauteil (20), das in der Ausnehmung (11) im wesentlichen passergenau aufgenommen ist, **dadurch gekennzeichnet, dass** sich in der Ausnehmung (11) ein Ausgleichsmaterial (30) befindet, das den nicht von dem Bauteil (20) ausgefüllten Raum der Ausnehmung (11) füllt, wobei das Folienverbundmaterial nach einem Verfahren nach einem der Ansprüche 1 bis 8 erhältlich ist.

## Claims

1. A method for manufacturing a foil composite material with a component (20) embedded in the foil composite material, having the following steps of:
(a) making available a carrier foil (5), at least one receiving foil (1, 2, 3, 4), a cover foil (6) and the component (20), wherein the at least one receiving foil (1, 2, 3, 4) has a recess (11), which is suitable in shape and size to receive the component (20) in substantially accurate register,
(b) placing the at least one receiving foil (1, 2, 3, 4) on the carrier foil (5),
(c) inserting the component (20) in the recess (11) of the at least one receiving foil, forming a partial stack of foils,
(d) covering the component (20) by placing the cover foil (6) on the partial stack of foils formed in step (c), forming a foil stack (10), and
(e) laminating the stack (10) formed in step (d) by hot pressing, forming the foil composite, wherein, before inserting the component (20) in the recess (11) of the at least one receiving foil (1, 2, 3, 4), a compensating material (30) is introduced into the recess (11) and/or is applied to surface regions of the component which are to be inserted in the recess,
**characterized in that**
the compensating material (30) is thermally activated at a lower temperature than the foils of the foil stack (10), and
the lamination of the foil stack (10) to form the foil composite material is carried out under vacuum, and
two or more receiving foils (1, 2, 3, 4) are stacked one above the other, each with at least one recess for receiving a portion of the component (20), wherein all recesses of the receiving foils (1, 2, 3, 4) together form the recess (11) for receiving the component (20) in substantially accurate register.

2. The method according to claim 1, **characterized in that** an irregularly shaped component (20) is inserted in the recess (11) of the at least one receiving foil (1, 2, 3, 4).

3. The method according to any of the preceding claims, **characterized in that** the foil stack (10) is heated during the lamination by heating devices (40, 41) at its two outer foils (6, 7), wherein the heating at the one outer foil (6) and at the other outer foil (7) is effected in each case with temperature profiles which differ from each other temporally and/or spatially.

4. The method according to any of the preceding claims, **characterized in that** the foil stack (10) is heated during the lamination by heating devices (40, 41) at its two outer foils (6, 7), wherein the heat transfer from the one of the heating devices (40, 41) to the one of the outer sheets (6, 7) is selectively controlled by inserting a thermal pressure pad (43, 44) between the heating device (40, 41) and the outer foil (6, 7), and optionally also the heat transfer from the other one of the heating devices (40 , 41) to the other one of the outer foils (6, 7) is selectively controlled by inserting a thermal pressure pad (43, 44) between the outer foil and the heating device.

5. The method according to any of the preceding claims, **characterized in that** the compensating material (30) lines the recess (11) of the at least one receiving foil (1, 2, 3, 4) completely and optionally covers at least a partial region of the surface of the at least one receiving foil (1, 2, 3, 4) facing away from the carrier foil (5).

6. The method according to any of the preceding claims, **characterized in that** the compensating material (30) leaves free at least a partial region of the recess (11) and/or of the surface of the at least one receiving foil (1, 2, 3, 4) facing away from the carrier foil (5), in which the component (20) is to be connected to another component.

7. The method according to any of the preceding claims, **characterized in that** as the compensating material (30) a thermally activatable adhesive is utilized, wherein the activation temperature of the adhesive is lower than the softening temperature of the foils (1, 2, 3, 4, 5, 6) adjacent to the adhesive.

8. The method according to any of the preceding claims, **characterized in that** as compensating material (30) a foil of a thermoplastic or of a thermoplastic elastomer is utilized, wherein the compensating material foil has a softening temperature which is lower than the softening temperature of the foils (1, 2, 3, 4, 5, 6) adjacent to the compensating material foil.

9. A foil composite material having a carrier foil (5), at least one receiving foil (1, 2, 3, 4) with a recess (11), a cover foil (6) and optionally at least one further foil (7, 8, 9), and a component (20) which is received in the recess (11) in substantially accurate register, **characterized in that** in the recess (11) a compensating material (30) is present which fills the space of the recess (11) not taken up by the component (20), wherein the foil composite material is obtainable by a method according to any of the claims 1 to 8.

## Revendications

1. Procédé de fabrication d'un matériau en feuille composite ayant un composant (20) incorporé dans le matériau en feuille composite, comportant les étapes suivantes:
(a) mise à disposition d'une feuille support (5), d'au moins une feuille réceptrice (1, 2, 3, 4), d'une feuille de recouvrement (6) et du composant (20), la moins une feuille réceptrice (1, 2, 3, 4) comportant un évidement (11) qui, quant à sa forme et de sa taille, est adapté à recevoir essentiellement en parfait repérage le composant (20),
(b) placement de la au moins une feuille réceptrice (1, 2, 3, 4) sur la feuille support (5),
(c) insertion du composant (20) dans l'évidement (11) de la au moins une feuille réceptrice de façon à former une pile partielle de feuilles,
(d) recouvrement du composant (20) par placement de la feuille de recouvrement (6) sur la pile partielle de feuilles formée à l'étape c), de façon à former une pile de feuilles (10), et
(e) laminage de la pile de feuilles (10) formée à l'étape d), par pressage à chaud de façon à former le matériau en feuille composite, cependant que, avant l'insertion du composant (20) dans l'évidement (11) de la au moins une feuille réceptrice (1, 2, 3, 4), un matériau de compensation (30) est introduit dans l'évidement (11) et/ou appliqué sur des zones de surface du composant devant être insérées dans l'évidement,
**caractérisé en ce que**
le matériau de compensation (30) est activé thermiquement à une température plus basse que les feuilles de la pile de feuilles (10), et
le laminage de la pile de feuilles (10) conduisant à l'obtention du matériau en feuille composite est effectué sous vide, et
deux ou plusieurs feuilles réceptrices (1, 2, 3, 4) comportant respectivement au moins un évidement pour la réception d'une partie du composant (20) sont empilées les unes sur les autres, tous les évidements des feuilles réceptrices (1, 2, 3, 4) formant ensemble l'évidement (11) destiné à la réception essentiellement en parfait repérage du composant (20).

2. Procédé selon la revendication 1, **caractérisé en ce qu'**un composant (20) de forme irrégulière est inséré dans l'évidement (11) de la au moins une feuille réceptrice (1, 2, 3, 4).

3. Procédé selon une des revendications précédentes, **caractérisé en ce que** la pile de feuilles (10) est, lors du laminage, chauffée à ses deux feuilles extérieures (6, 7) par des dispositifs de chauffage (40, 41), le chauffage à l'une feuille extérieure (6) et à l'autre feuille extérieure (7) ayant respectivement lieu à des profils de températures qui se différencient l'un de l'autre sur le plan temporel et/ou local.

4. Procédé selon une des revendications précédentes, **caractérisé en ce que** la pile de feuilles (10) est, lors du laminage, chauffée à ses deux feuilles extérieures (6, 7) par des dispositifs de chauffage (40, 41), le transfert de chaleur de l'un des dispositifs de chauffage (40, 41) à la une des feuilles extérieures (6, 7) étant réglé de manière ciblée par interposition d'un tampon de thermopression (43, 44) entre le dispositif de chauffage (40, 41) et la feuille extérieure (6, 7) et, en option, aussi le transfert de chaleur de l'autre des dispositifs de chauffage (40, 41) à l'autre des feuilles extérieures (6, 7) étant réglé de manière ciblée par interposition d'un tampon de thermopression (43, 44) entre la feuille extérieure et le dispositif de chauffage.

5. Procédé selon une des revendications précédentes, **caractérisé en ce que** le matériau de compensation (30) comble entièrement l'évidement (11) de la au moins une feuille réceptrice (1, 2, 3, 4) et, en option, couvre au moins une zone partielle de la surface non tournée vers la feuille support (5) de la au moins une feuille réceptrice (1, 2, 3, 4).

6. Procédé selon une des revendications précédentes, **caractérisé en ce que** le matériau de compensation (30) laisse libre au moins une zone partielle de l'évidement (11) et/ou de la surface non tournée vers la feuille support (5) de la au moins une feuille réceptrice (1, 2, 3, 4), dans laquelle le composant (20) doit être joint à un autre composant.

7. Procédé selon une des revendications précédentes, **caractérisé en ce que**, en tant que matériau de compensation (30), c'est une colle thermiquement activable qui est utilisée, la température d'activation de la colle étant inférieure à la température de ramollissement des feuilles (1, 2, 3, 4, 5, 6) adjacentes à la colle.

8. Procédé selon une des revendications précédentes, **caractérisé en ce que**, en tant que matériau de compensation (30), c'est une feuille en un thermoplastique ou en un élastomère thermoplastique qui est utilisée, la feuille de matériau de compensation ayant une température de ramollissement inférieure à la température de ramollissement des feuilles (1, 2, 3, 4, 5, 6) adjacentes à la feuille de matériau de compensation.

9. Matériau en feuille composite comportant une feuille support (5), au moins une feuille réceptrice (1, 2, 3, 4) ayant un évidement (11), une feuille de recouvrement (6) et en option au moins une feuille supplémentaire (7, 8, 9), et un composant (20) reçu essentiellement en parfait repérage dans l'évidement (11), **caractérisé en ce que**, dans l'évidement (11), il y a un matériau de compensation (30) qui emplit l'espace de l'évidement (11) non rempli par le composant (20), le matériau en feuille composite pouvant être obtenu suivant un procédé selon une des revendications de 1 à 8.
